# FASCICULE DE BREVET EUROPEEN

(11) **EP 1 567 978 B1**
(45) Date de publication et mention de la délivrance du brevet: **02.01.2008**
(21) Numéro de dépôt: 03789469.8
(22) Date de dépôt: 21.11.2003
(51) Int. Cl.: G06K 19/073, G07C 1/00, G06F 11/34, G04F 10/00, G04F 1/00, G07F 7/10

(54) **ENTITE ELECTRONIQUE SECURISEE INTEGRANT LA GESTION DE LA DUREE DE VIE D'UN OBJET**
ELEKTRONISCHE GESICHERTE EINRICHTUNG MIT VERWALTUNG DER LEBENSDAUER EINES OBJEKTS
SECURE ELECTRONIC ENTITY INTEGRATING LIFE SPAN MANAGEMENT OF AN OBJECT

(30) Priorité: 25.11.2002 FR 0214768
(43) Date de publication de la demande: 31.08.2005
(73) Titulaire: OBERTHUR CARD SYSTEMS SA, 75017 Paris (FR)
(72) Inventeur: ABGRALL, Renan, F-75001 Paris (FR); GEFFROTIN, Bernard, F-92190 Meudon (FR)
(74) Mandataire: Rosenberg, Muriel Sylvie
(86) Numéro de dépôt international: PCT/FR2003/003453
(87) Numéro de publication internationale: WO 2004/051558

(56) Documents cités:
- DE-A- 3 041 109
- DE-A- 4 441 038
- DE-A- 19 616 943
- DE-A- 19 821 013
- FR-A- 2 707 409
- US-A- 4 710 613
- US-A- 4 808 802
- US-A- 5 014 311

## Description

L'invention se rapporte à une entité électronique sécurisée adaptée à mémoriser au moins un objet et a notamment pour objet un perfectionnement apporté à une telle entité électronique pour que celle-ci puisse effectuer une gestion d'une durée de vie attribuée à l'objet, qui s'écoule à partir d'une date de référence associée à cet objet.

On entend ici une gestion du temps "dans" l'entité électronique au sens où cette gestion est indépendante de tout système extérieur de mesure du temps, qu'il s'agisse par exemple d'un générateur de signal d'horloge ou de tout autre moyen de mesure du temps situé à l'extérieur par rapport à l'entité électronique.

Ces spécificités permettent de rendre relativement inviolable l'entité électronique objet de la présente invention.

Dans toute la suite, la durée de vie d'un objet s'entend aussi bien comme une durée totale d'utilisation de cet objet que comme une durée forfaitaire choisie à l'avance, indépendante de la durée d'utilisation effective de l'objet.

L'invention peut s'appliquer à toute entité électronique sécurisée, comme, par exemple, une carte à microcircuit sécurisée, comportant des moyens lui permettant d'être couplée au moins temporairement à une source d'énergie électrique pour la mise en oeuvre au moins d'une opération. L'invention peut notamment permettre de gérer la durée de vie de la carte elle-même ou d'objets contenus dans la carte, en l'absence de source permanente d'alimentation en énergie.

L'entité électronique peut être par exemple une carte à microcircuit telle qu'une carte bancaire, une carte de contrôle d'accès, une carte d'identité, une carte SIM ou une carte mémoire (telle qu'une carte SD (Secured Digital) de Panasonic), ou peut être une carte PCMCIA (architecture internationale de cartes-mémoire d'ordinateurs individuels, en anglais *"Personal Computer Memory Card International Architecture")* (par exemple, une carte IBM 4758).

La sécurité d'un objet mémorisé dans une telle entité électronique peut être améliorée s'il est possible de prendre en compte le temps qui s'est écoulé depuis une date de référence liée à cet objet, que l'objet soit le système d'exploitation de la carte ou un code secret (code PIN, clé, certificat), un fichier de données ou un système de fichiers, une application ou encore des droits d'accès.

Il existe des applications, telles que la gestion de droits numériques de type DRM (en anglais *"Digital Right Management"*), qui nécessitent d'utiliser un temps certifié, c'est-à-dire provenant d'une mesure du temps sécurisée.

D'autre part, limiter la durée de validité de certaines données secrètes mémorisées dans une carte à microcircuit, telles qu'une clé, un certificat ou un code PIN, permet d'augmenter la sécurité de la carte.

En outre, on peut utiliser la limitation de la durée de validité pour gérer certains objets dans la carte, par exemple pour la gestion de versions successives d'une application ou le "recyclage des déchets", c'est-à-dire la libération d'espace mémoire correspondant à des objets qui ne sont plus utilisés (technique dite du *"garbage collector"* ou collecte des déchets).

Le document FR-A-2 707 409 décrit un procédé pour limiter le temps d'enregistrement ou de lecture d'informations sensibles dans une carte à mémoire.

Le document DE-A-30 41 109 a trait à un moyen d'identification contenant un élément temporel permettant l'invalidation temporaire du moyen d'identification en cas d'entrée erronée.

Le document US-A-4 808 802 divulgue une fonctionnalité de limitation dans le temps d'informations stockées dans une mémoire, ces informations étant effacées après écoulement d'une durée prédéterminée.

A la connaissance du demandeur, il n'existe pas, dans les cartes à microcircuit connues, de possibilité de mesurer le temps de façon sécurisée et autonome ou de limiter la durée de validité d'objets mémorisés dans la carte. Cela augmente les probabilités de piratage de ces objets en laissant à un individu mal intentionné l'opportunité de les utiliser de façon frauduleuse, par exemple en fournissant à la carte une fausse indication du temps.

La présente invention a pour but de remédier à ces inconvénients, en empêchant un attaquant d'utiliser de façon frauduleuse une entité électronique sécurisée, ou un ou plusieurs objets mémorisés dans celle-ci. Pour ce faire, la présente invention intègre dans l'entité électronique la gestion de la durée de vie attribuée à ce ou ces objets, voire à l'entité électronique elle-même.

Dans ce but, l'invention propose une entité électronique sécurisée selon la revendication 1, dont le préambule est constitué par les caractéristiques décrites dans FR 2 707 409.

Conformément à l'invention, les moyens permettant de déterminer le temps qui s'écoule à partir de la date de référence se situent dans l'entité électronique, ce qui permet d'augmenter sa sécurisation.

Comme indiqué plus haut, la durée de vie précitée peut, soit correspondre à la durée totale d'utilisation effective de l'objet, soit être une période de temps indépendante de la durée totale d'utilisation effective de l'objet.

Dans le cas où la durée de vie est indépendante de la durée totale d'utilisation effective de l'objet, la date de référence est une date qui marque le début de la mesure du temps. Elle est éventuellement, mais non nécessairement, mémorisée dans l'entité électronique. Dans le cas où la durée de vie correspond à la durée totale d'utilisation effective de l'objet, on mesure le temps écoulé lors de chaque utilisation de cet objet, la date de référence étant à chaque fois la date de début d'utilisation.

Avantageusement, l'unité de mesure du temps est adaptée à fournir une mesure du temps qui s'écoule à partir de la date de référence même lorsque l'entité électronique n'est pas alimentée par une source d'énergie extérieure.

Avantageusement, l'unité de mesure du temps est adaptée à fournir une mesure du temps qui s'écoule à partir de la date de référence même lorsque l'entité électronique n'est pas alimentée électriquement.

Avantageusement, l'unité de mesure du temps est adaptée à fournir une mesure du temps qui s'écoule à partir de la date de référence indépendamment de tout signal d'horloge extérieur.

En ce sens, l'entité électronique est autonome, à la fois du point de vue de la mesure du temps et du point de vue de l'alimentation électrique.

En variante, on peut bien entendu prévoir une pile et/ou une horloge dans l'entité électronique.

L'unité de mesure du temps peut comporter un moyen de comparaison de deux dates, une date étant, de façon générale, une expression du temps courant et ces deux dates s'entendant ici comme deux instants définis par rapport à une même référence temporelle, laquelle est par exemple la date de référence associée à l'objet dont l'entité électronique contrôle la durée de vie. Le moyen de comparaison peut comparer la date courante directement à la date de référence de l'objet, ce qui permet de déduire directement la durée de vie restante de l'objet. En variante, le moyen de comparaison peut comparer, à chaque utilisation de l'objet, la date de fin d'utilisation à la date de début d'utilisation et additionner cette durée aux durées qui auront été calculées pour les utilisations antérieures de l'objet. Ensuite, le moyen de comparaison vérifie si cette durée cumulée est ou non supérieure à la durée de vie fixée pour cet objet.

L'unité de mémorisation de la durée de vie comporte avantageusement une entité sécurisée et peut être située dans ou hors de l'entité électronique.

Comme mentionné en introduction, à titre d'exemples non limitatifs, l'objet peut être le système d'exploitation d'une carte, un code secret (code PIN, clé ou certificat), un fichier ou un système de fichiers, une application ou encore des droits d'accès. La date de référence associée à l'objet peut être la date à laquelle l'objet a été créé dans l'entité électronique.

Dans un mode de réalisation préféré de la présente invention, l'entité électronique sécurisée comporte au moins un sous-ensemble comprenant :
un composant capacitif présentant une fuite au travers de son espace diélectrique, des moyens permettant de coupler ce composant capacitif à une source d'énergie électrique pour être chargé par la source d'énergie électrique et
un moyen de mesure de la charge résiduelle du composant capacitif, cette charge résiduelle étant au moins en partie représentative du temps qui s'est écoulé après que le composant capacitif a été découplé de la source d'énergie électrique.

Dans ce cas, le composant capacitif du sous-ensemble précité ne peut être chargé que lorsque l'entité électronique sécurisée est couplée à la source d'énergie électrique. Cette dernière peut être extérieure à l'entité électronique sécurisée, mais ce n'est pas impératif : en variante, on peut prévoir d'alimenter l'entité électronique par une pile disposée dans ou sur celle-ci.

L'entité électronique pourra être pourvue d'un moyen de commutation pour découpler le composant capacitif de la source d'énergie électrique, cet événement initialisant la mesure du temps.

Plus généralement, la mesure du temps, c'est-à-dire la variation de charge du composant capacitif, commence dès que, après avoir été chargé, celui-ci se trouve électriquement isolé de tout autre circuit et ne peut plus se décharger qu'à travers son propre espace diélectrique.

Cependant, même si, physiquement, la charge résiduelle mesurée est liée à l'intervalle de temps écoulé entre l'isolement de l'élément capacitif et une mesure donnée de sa charge résiduelle, un intervalle de temps mesuré peut être déterminé entre deux mesures, la première mesure déterminant en quelque sorte une charge résiduelle de référence. Le moyen de mesure de la charge résiduelle du composant capacitif est mis en oeuvre lorsqu'on désire connaître un temps écoulé.

Le composant capacitif est chargé au cours d'une utilisation de l'objet dont l'entité électronique contrôle la durée de vie, cette "utilisation" s'entendant au sens le plus large et incluant par exemple la création de l'objet. Le moyen de mesure de la charge résiduelle est mis en oeuvre au cours d'une telle utilisation pour fournir une information, soit représentative du temps qui s'est écoulé depuis la date de référence, soit représentative de la durée totale d'utilisation de l'objet, selon que la durée de vie de l'objet est indépendante ou non de la durée d'utilisation effective de cet objet.

Par ailleurs, l'invention permet en outre à l'entité électronique sécurisée de continuer à mesurer le temps écoulé, même après que l'entité électronique a été temporairement alimentée en courant et qu'elle se trouve ensuite dépourvue de toute nouvelle alimentation électrique. L'invention ne nécessite donc pas d'utiliser une source d'énergie électrique en permanence.

Le moyen de mesure de la charge résiduelle peut être compris dans l'unité de mesure du temps mentionnée plus haut.

Dans le mode préféré de réalisation, le moyen de mesure de la charge résiduelle comprend un transistor à effet de champ dont la grille est connectée à une borne du composant capacitif, c'est-à-dire à une "armature" d'une capacité.

Une telle capacité peut être réalisée en technologie MOS et son espace diélectrique peut alors être constitué par un oxyde de silicium. Dans ce cas, il est avantageux que le transistor à effet de champ soit réalisé également en technologie MOS. La grille du transistor à effet de champ et l'"armature" du composant capacitif MOS sont reliées et constituent une sorte de grille flottante qui peut être connectée à un composant permettant d'injecter des porteurs de charge.

On peut aussi faire en sorte qu'il n'existe aucune connexion électrique à proprement parler avec l'environnement extérieur. La connexion de la grille flottante peut être remplacée par une grille de contrôle (électriquement isolée) qui vient charger la grille flottante, par exemple par effet tunnel ou par "porteurs chauds". Cette grille permet de faire transiter des porteurs de charge vers la grille flottante commune au transistor à effet de champ et au composant capacitif. Cette technique est bien connue des fabricants de mémoires de type EPROM ou EEPROM.

Le transistor à effet de champ et le composant capacitif peuvent constituer une unité intégrée dans un microcircuit compris dans l'entité électronique sécurisée ou faisant partie d'un autre microcircuit logé dans une autre entité sécurisée, telle qu'un serveur.

A certains instants, périodiques ou non, durant l'utilisation de l'objet dont la durée de vie est contrôlée par l'entité électronique sécurisée, lorsque l'entité électronique sécurisée est couplée à une source d'énergie électrique extérieure, le composant capacitif est chargé à une valeur prédéterminée, connue ou mesurée et mémorisée, et le moyen de mesure de la charge résiduelle est relié à une borne de ce composant capacitif.

Lorsque l'objet n'est pas utilisé, le moyen de mesure de la charge résiduelle, notamment le transistor à effet de champ, n'est plus alimenté mais sa grille reliée à la borne du composant capacitif est portée à une tension correspondant à la charge de celui-ci.

Lorsque la durée de vie est indépendante de la durée effective d'utilisation de l'objet, pendant toute la période de temps qui sépare la date de référence associée à l'objet de la date de son utilisation courante, le composant capacitif se décharge lentement au travers de son propre espace diélectrique de sorte que la tension appliquée sur la grille du transistor à effet de champ diminue progressivement.

Au moment où l'entité électronique est à nouveau connectée à une source d'énergie électrique, lorsque l'objet est à nouveau utilisé, une tension électrique est appliquée entre le drain et la source du transistor à effet de champ. Ainsi, un courant électrique allant du drain vers la source (ou dans le sens contraire selon les cas) est engendré et peut être recueilli et analysé.

La valeur du courant électrique mesuré dépend des paramètres technologiques du transistor à effet de champ et de la différence de potentiel entre le drain et la source, mais aussi de la tension entre la grille et le substrat. Le courant dépend donc des porteurs de charge accumulés dans la grille flottante commune au transistor à effet de champ et au composant capacitif. Par conséquent, ce courant de drain est aussi représentatif du temps qui s'est écoulé entre la date de référence et la date courante.

Le courant de fuite d'une telle capacité dépend bien sûr de l'épaisseur de son espace diélectrique mais également de tout autre paramètre dit technologique tel que les longueurs et surfaces de contact des éléments du composant capacitif. Il faut également prendre en compte l'architecture tridimensionnelle des contacts de ces parties, qui peut induire des phénomènes modifiant les paramètres du courant de fuite (par exemple, modification de la valeur de la capacité dite tunnel). Le type et la quantité des dopants et des défauts peuvent être modulés pour modifier les caractéristiques du courant de fuite.

Les variations de température ont aussi une influence, plus précisément la moyenne des apports d'énergie calorifique appliqués à l'entité électronique sécurisée pendant le temps d'utilisation de l'objet. En fait, tout paramètre intrinsèque à la technologie MOS peut être source de modulation du processus de la mesure du temps.

Avantageusement, l'épaisseur de la couche isolante du transistor à effet de champ est notablement supérieure (par exemple environ trois fois supérieure) à l'épaisseur de la couche isolante du composant capacitif.

Quant à l'épaisseur de la couche isolante du composant capacitif, elle est avantageusement comprise entre 4 et 10 nanomètres.

Pour obtenir une information sensiblement uniquement représentative du temps, on peut prévoir, dans une variante de réalisation, au moins deux sous-ensembles tels que définis ci-dessus, exploités "en parallèle". Les deux composants capacitifs sensibles à la température sont définis avec des fuites différentes, toutes choses égales par ailleurs, c'est-à-dire que leurs espaces diélectriques (épaisseur de la couche d'oxyde de silicium) ont des épaisseurs différentes.

A cet effet, selon une disposition avantageuse de l'invention, l'entité électronique définie ci-dessus est remarquable en ce qu'elle comporte :
au moins deux sous-ensembles précités comprenant chacun :
   un composant capacitif présentant une fuite au travers de son espace diélectrique, des moyens permettant de coupler ce composant capacitif à une source d'énergie électrique pour être chargé par cette source d'énergie électrique et
   un moyen de mesure de la charge résiduelle du composant capacitif, cette charge résiduelle étant au moins en partie représentative du temps qui s'est écoulé après que le composant capacitif a été découplé de la source d'énergie électrique, ces sous-ensembles comprenant des composants capacitifs présentant des fuites différentes au travers de leurs espaces diélectriques respectifs,
   et en ce que l'entité électronique sécurisée comporte en outre :
   des moyens de traitement des mesures des charges résiduelles respectives de ces composants capacitifs, pour extraire de ces mesures une information sensiblement indépendante des apports calorifiques appliqués à l'entité électronique sécurisée pendant le temps écoulé à partir de la date de référence.

Par exemple, les moyens de traitement peuvent comporter un tableau de valeurs de temps mémorisées, ce tableau étant adressé par ces mesures respectives. Autrement dit, chaque couple de mesures désigne une valeur de temps mémorisée indépendante de la température et des variations de température pendant la période mesurée. L'entité électronique comporte avantageusement une mémoire associée à un microprocesseur et une partie de cette mémoire peut être utilisée pour mémoriser le tableau de valeurs.

En variante, les moyens de traitement peuvent comporter un logiciel de calcul programmé pour exécuter une fonction prédéterminée permettant de calculer l'information temps, sensiblement indépendante des apports calorifiques, en fonction des deux mesures précitées.

L'invention est particulièrement adaptée à s'appliquer aux cartes à microcircuit. L'entité électronique sécurisée peut être une carte à microcircuit telle qu'une carte bancaire, une carte de contrôle d'accès, une carte d'identité, une carte SIM ou une carte mémoire (telle qu'une carte SD de Panasonic), ou peut comprendre une carte à microcircuit, ou encore peut être d'un autre type, par exemple, être une carte PCMCIA (telle qu'une carte IBM 4758).

L'invention est en outre remarquable par son niveau d'intégration.

D'autres aspects et avantages de l'invention apparaîtront à la lecture de la description détaillée qui suit de modes particuliers de réalisation, donnés à titre d'exemples non limitatifs. La description est faite en référence aux dessins qui l'accompagnent, dans lesquels :
- la figure 1 est un synoptique représentant, dans un mode particulier de réalisation, une entité électronique sécurisée conforme à la présente invention ;
- la figure 2 est un schéma-bloc d'une carte à microcircuit à laquelle peut s'appliquer l'invention, dans un mode particulier de réalisation ;
- la figure 3 est un schéma de principe d'un sous-ensemble que l'entité électronique sécurisée peut comporter dans un mode particulier de réalisation ; et
- la figure 4 est un schéma-bloc d'une variante du mode de réalisation des figures 1 et 2.

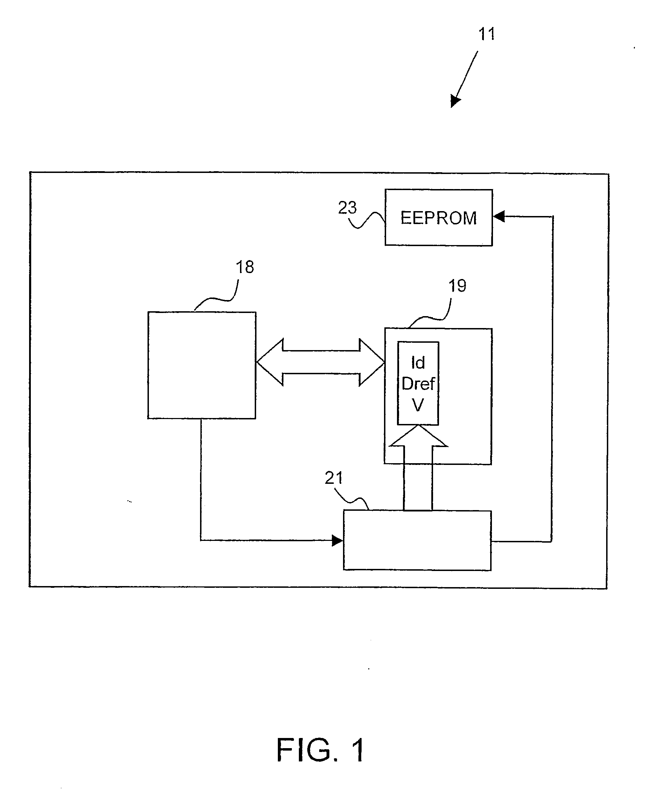

Comme le montre la **figure 1**, dans un mode particulier de réalisation, une entité électronique sécurisée 11 conforme à la présente invention comporte une mémoire non volatile 23, par exemple du type EEPROM, mémorisant des données relatives à au moins un objet, tel qu'un système d'exploitation, un code secret (code PIN, clé de cryptage ou certificat, par exemple), un fichier ou un système de fichiers, une application, ou encore des droits d'accès.

On décrit ci-après un mode particulier de réalisation où la durée de vie choisie pour un objet est indépendante de la durée effective d'utilisation de cet objet.

L'entité électronique 11 contient une unité 18 de mesure du temps qui s'écoule à partir d'une date de référence Dref associée à l'objet mémorisé dans l'EEPROM 23. Cette date de référence peut par exemple être la date de création de l'objet dans la carte.

L'unité 18 de mesure du temps est indépendante de tout système extérieur de mesure du temps, qu'il s'agisse par exemple d'un générateur de signal d'horloge ou de tout autre moyen de mesure du temps situé à l'extérieur par rapport à la carte.

L'entité électronique sécurisée 11 comporte également une unité 19 de mémorisation de plusieurs paramètres définissant l'objet dont on veut gérer la durée de vie dans l'entité électronique sécurisée :
- un identifiant Id de l'objet,
- la date de référence Dref précitée, et
- une durée de vie V attribuée à l'objet et déterminée au préalable.

Les opérations de création d'un objet mettent bien entendu en oeuvre des mécanismes sécuritaires pour protéger la donnée "durée de vie" V.

L'unité de mémorisation 19 peut être confondue avec l'EEPROM 23. L'unité de mémorisation 19 est avantageusement une mémoire sécurisée de l'entité électronique 11, cette mémoire étant notamment non accessible de l'extérieur. En variante, on peut envisager de situer l'unité de mémorisation 19 hors de l'entité électronique sécurisée 11, dans une entité sécurisée extérieure. Dans ce dernier cas, la valeur de la durée de vie V et/ou l'identifiant ld et/ou la date de référence Dref sont reçus de l'extérieur, de la part d'un tiers dit "de confiance" (autorité habilitée), par l'entité électronique sécurisée 11, par l'intermédiaire d'un protocole sécurisé (i.e. mettant en oeuvre des moyens cryptographiques) et sont mémorisés au moins temporairement dans une zone sécurisée de l'entité électronique 11.

L'entité électronique sécurisée 11 comporte en outre une unité 21 de mise à jour et d'invalidation, commandée par l'unité 18 de mesure du temps.

Conformément à la présente invention, l'unité de mémorisation 19 coopère avec l'unité 18 de mesure du temps de façon à comparer le temps écoulé et la durée de vie V, par exemple à chaque utilisation de l'objet, ou à des instants quelconques auxquels on souhaite vérifier la validité de l'objet.

Si, après comparaison du temps écoulé et de la durée de vie V, il apparaît que la durée de vie est atteinte ou dépassée, l'unité 21 de mise à jour et d'invalidation agit sur l'objet, pour, soit mettre à jour sa durée de vie V dans l'unité de mémorisation 19, afin de prolonger la durée de vie de l'objet, moyennant la mise en oeuvre de mécanismes sécuritaires, soit mettre à jour l'objet (par exemple, en remplaçant une version existante de l'objet par une nouvelle version), soit inhiber temporairement le fonctionnement de l'objet, pendant une période de temps prédéterminée, voire rendre l'objet définitivement inutilisable.

On peut prévoir dans la mémoire de l'entité électronique sécurisée 11 une région (comprenant par exemple un fichier) contenant la date, par exemple en secondes, à partir de la date de référence Dref.

Dès lors, avant d'autoriser une nouvelle utilisation de l'objet, il est prévu de comparer la date de l'utilisation courante avec la date de référence Dref. Si la différence entre les deux dates est égale ou supérieure à la durée de vie V, l'unité 21 de mise à jour et d'invalidation entre en action.

L'invention compte de nombreuses applications possibles, parmi lesquelles on peut citer :
- la limitation de la durée de vie d'une carte à microcircuit en fonction de la durée du contrat souscrit par son utilisateur, de façon à garantir qu'aucun usage détourné et frauduleux de la carte n'ait lieu au-delà de la durée d'utilisation prévue ;
- la limitation, de façon analogue, de la durée de vie d'un système de fichiers ;
- la commande d'un changement périodique, par l'utilisateur, du code confidentiel lié à l'utilisation de l'entité électronique sécurisée ;
- la définition d'une date limite de validité pour des données contenues dans un fichier, au-delà de laquelle la lecture de ces données sera rendue impossible ou du moins sera accompagnée d'une mise en garde à l'attention de l'utilisateur ;
- la détection de la fin de la validité d'une application, liée par exemple à un événement sportif, culturel ou artistique limité dans le temps, au-delà de laquelle cette application sera automatiquement supprimée ;
- la définition d'une date d'échéance pour une période d'essai gratuit d'une version d'évaluation d'un logiciel, au-delà de laquelle les droits d'utilisation du logiciel pourront être prolongés (moyennant la mise en oeuvre d'un mécanisme sécuritaire), après paiement par l'utilisateur ;
- la gestion de droits d'accès électronique à un morceau musical, un film ou autre, via Internet, sous forme d'abonnement forfaitaire d'une durée fixée à l'avance (par exemple, un mois) ou en fonction de la durée effective d'utilisation de ces droits d'accès (par exemple, dix heures d'écoute) ;
- etc.

Dans le dernier exemple d'application mentionné ci-dessus, un utilisateur souhaite par exemple accéder pour une durée définie au contenu du site Internet d'un éditeur de contenu musical. Il achète à cet effet des droits d'accès au contenu musical pour une durée déterminée, par exemple quatre heures. Après vérification, l'éditeur envoie à l'entité électronique sécurisée de l'utilisateur un message sécurisé d'ouverture de droits d'écoute pour la durée prévue. A réception de ce message, l'entité électronique sécurisée crée dans sa mémoire un objet "droit d'écoute" et initialise la durée de vie V avec la valeur choisie, ici quatre heures.

A la première utilisation de l'objet, c'est-à-dire lors du premier accès au contenu musical, l'entité électronique sécurisée vérifie la présence de l'objet "droit d'écoute" et mémorise la date de début d'écoute. L'utilisateur accède ensuite au contenu musical. A chaque demande d'un secret de décryptage, l'entité électronique sécurisée vérifie la présence de l'objet "droit d'écoute" et sa validité, en fonction du temps actualisé. Si la différence entre la date courante et la date de référence (qui est ici la date de début d'écoute) est inférieure à quatre heures, alors le droit est toujours valable et l'entité électronique sécurisée fournit le secret qui permet de décrypter le contenu musical. En revanche, si cette différence est égale ou supérieure à quatre heures, le droit n'est plus valable et le secret de décodage n'est plus fourni. En outre, l'entité électronique peut invalider temporairement l'objet "droit d'écoute", voire le détruire.

En cas d'arrêt d'utilisation de l'objet "droit d'écoute" par l'utilisateur avant la fin des droits, la durée de vie de cet objet est mise à jour en fonction du temps restant : la nouvelle valeur de la durée de vie est égale à la durée de vie précédente, diminuée de la date courante ainsi que de la date de début d'écoute.

Dans un autre exemple d'application de l'invention, dans le domaine des télécommunications mobiles, l'entité électronique sécurisée peut être une carte à puce du type carte SIM et l'objet peut être une application dite SAT ("*SIM Application Toolkit",* défini notamment par la norme GSM 03.48). Les applications peuvent être chargées au moment de la personnalisation de la carte SIM, ou être téléchargées, soit en utilisant la technologie SMS (service de messages courts, en anglais *"Short Message Service"*), également définie par la norme GSM précitée, soit via un lecteur connecté à un ordinateur lui-même connecté à un centre de gestion de cartes.

L'entité électronique gère un tableau d'applications SAT contenant, pour chaque application, un identifiant AID de l'application, une date de référence (qui est par exemple la date de création de l'application) et la durée de vie de l'application.

A chaque déclenchement de l'application, la carte SIM détermine grâce à l'unité de mesure du temps si l'application est toujours valable. Si ce n'est pas le cas, c'est-à-dire si la différence entre la date courante et la date de création de l'application est égale ou supérieure à la durée de vie de l'application, la carte envoie une commande administrative de type Delete_application(AID) et met à jour le tableau d'applications SAT.

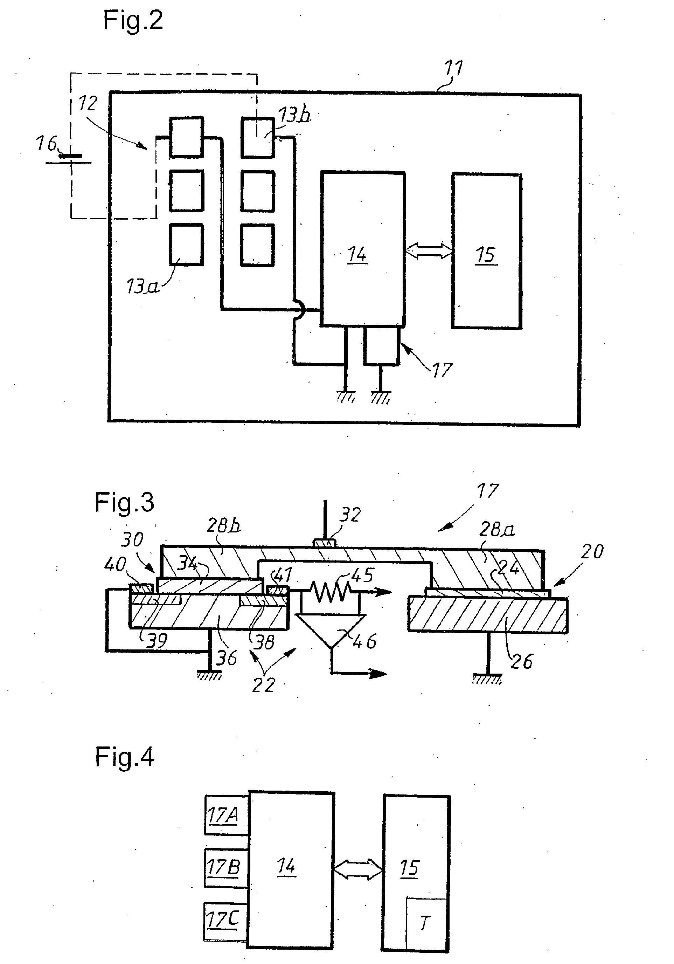

La **figure 2** illustre une entité électronique sécurisée 11 conforme à la présente invention, dans un mode particulier de réalisation où cette entité est une carte à microcircuit. L'entité électronique sécurisée 11 comporte une unité 12 lui permettant d'être couplée à une source d'énergie électrique extérieure 16.

Dans le mode particulier de réalisation représenté, l'entité électronique sécurisée 11 comporte des plages de raccordement métalliques susceptibles d'être connectées à une unité formant un lecteur de carte. Deux de ces plages de raccordement 13a, 13b sont réservées à l'alimentation électrique du microcircuit, la source d'énergie électrique étant logée dans un serveur ou autre dispositif auquel l'entité électronique sécurisée est momentanément raccordée. Ces plages de raccordement peuvent être remplacées par une antenne logée dans l'épaisseur de la carte et susceptible de fournir au microcircuit l'énergie électrique nécessaire à son alimentation tout en assurant la transmission bidirectionnelle de signaux radiofréquence permettant les échanges d'informations. On parle alors de technologie sans contact.

Le microcircuit comprend un microprocesseur 14 associé de façon classique à une mémoire 15.

Dans un exemple particulier de réalisation, l'entité électronique sécurisée 11 comporte au moins un sous-ensemble 17 (ou est associée à un tel sous-ensemble) chargé de la mesure du temps.

Le sous-ensemble 17, qui est représenté plus en détail sur la **figure 3**, est donc logé dans l'entité électronique sécurisée 11. Il peut faire partie du microcircuit et être réalisé dans la même technologie d'intégration que celui-ci.

Le sous-ensemble 17 comprend un composant capacitif 20 présentant une fuite au travers de son espace diélectrique 24 et une unité 22 de mesure de la charge résiduelle de ce composant 20.

Cette charge résiduelle est au moins en partie représentative du temps écoulé après que le composant capacitif 20 a été découplé de la source d'énergie électrique, c'est-à-dire, dans l'exemple donné ici, depuis la date de référence Dref associée à l'objet dont on cherche à contrôler la durée de vie.

Le composant capacitif 20 est chargé par la source d'énergie électrique extérieure soit par connexion directe, comme dans l'exemple décrit, soit par tout autre moyen qui peut amener à charger la grille. L'effet tunnel est une méthode permettant de charger la grille sans connexion directe. Dans l'exemple, la charge du composant capacitif 20 est pilotée par le microprocesseur 14.

Dans l'exemple, le composant capacitif 20 est une capacité réalisée suivant la technologie MOS. L'espace diélectrique 24 de cette capacité est constitué par une couche d'oxyde de silicium déposée à la surface d'un substrat 26 constituant une des armatures du condensateur. Ce substrat 26 est ici connecté à la masse, c'est-à-dire à une des bornes d'alimentation de la source d'énergie électrique extérieure, lorsque celle-ci se trouve raccordée à la carte. L'autre armature du condensateur est un dépôt conducteur 28a appliqué sur l'autre face de la couche d'oxyde de silicium.

Par ailleurs, l'unité 22 de mesure mentionnée précédemment comprend essentiellement un transistor 30 à effet de champ, ici réalisé suivant la technologie MOS, comme la capacité. La grille du transistor 30 est connectée à une borne du composant capacitif 20. Dans l'exemple, la grille est un dépôt conducteur 28b de même nature que le dépôt conducteur 28a qui, comme indiqué ci-dessus, constitue une des armatures du composant capacitif 20.

Les deux dépôts conducteurs 28a et 28b sont reliés l'un à l'autre ou ne constituent qu'un seul et même dépôt conducteur. Une connexion 32 reliée au microprocesseur 14 permet d'appliquer une tension à ces deux dépôts 28a et 28b, pendant un court intervalle de temps nécessaire pour charger le composant capacitif 20. L'application de cette tension est pilotée par le microprocesseur 14.

Plus généralement, la connexion 32 permet de charger le composant capacitif 20 à un moment choisi, sous la commande du microprocesseur 14 et c'est à partir du moment où cette connexion de charge est coupée par le microprocesseur 14 (ou lorsque l'entité électronique sécurisée 11 est découplée dans son ensemble de toute source d'alimentation électrique) que la décharge du composant capacitif 20 au travers de son espace diélectrique 24 commence, cette perte de charge électrique étant représentative du temps écoulé. La mesure du temps implique la mise en conduction momentanée du transistor 30, ce qui suppose la présence d'une source d'énergie électrique appliquée entre drain et source.

Le transistor 30 à effet de champ en technologie MOS comporte, outre la grille, un espace diélectrique de grille 34 séparant cette dernière d'un substrat 36 dans lequel sont définies une région de drain 38 et une région de source 39. L'espace diélectrique de grille 34 est constitué par une couche isolante d'oxyde de silicium. La connexion de source 40 appliquée à la région de source 39 est reliée à la masse et au substrat 36. La connexion de drain 41 est reliée à un circuit de mesure du courant de drain qui comporte une résistance 45 aux bornes de laquelle sont connectées les deux entrées d'un amplificateur différentiel 46. La tension délivrée à la sortie de cet amplificateur est donc proportionnelle au courant de drain.

La grille 28b est mise en position flottante pendant qu'on mesure le temps écoulé par rapport à la durée de vie de l'objet. Autrement dit, aucune tension n'est appliquée à la grille pendant cette même mesure. En revanche, puisque la grille est connectée à une armature du composant capacitif 20, la tension de grille pendant cette même mesure est égale à une tension qui se développe entre les bornes du composant capacitif 20 et qui résulte d'une charge initiale de celui-ci réalisée sous le contrôle du microprocesseur 14 au cours de la dernière utilisation de l'objet.

L'épaisseur de la couche isolante du transistor 30 est notablement plus grande que celle du composant capacitif 20. A titre d'exemple non limitatif, l'épaisseur de la couche isolante du transistor 30 peut être environ trois fois supérieure à l'épaisseur de la couche isolante du composant capacitif 20. Selon l'application envisagée, l'épaisseur de la couche isolante du composant capacitif 20 est comprise entre 4 et 10 nanomètres, environ.

Lorsque le composant capacitif 20 est chargé par la source d'énergie électrique extérieure et après que la connexion de charge a été coupée sous la commande du microprocesseur 14, la tension aux bornes du composant capacitif 20 diminue lentement au fur et à mesure que ce dernier se décharge progressivement au travers de son propre espace diélectrique 24. La décharge au travers de l'espace diélectrique 34 du transistor 30 à effet de champ est négligeable compte tenu de l'épaisseur de ce dernier.

A titre d'exemple nullement limitatif, si, pour une épaisseur d'espace diélectrique donnée, on charge la grille et l'armature du composant capacitif 20 à 6 volts à un instant t = 0, le temps associé à une perte de charge de 1 volt, c'est-à-dire un abaissement de la tension à une valeur de 5 volts, est de l'ordre de 24 secondes pour une épaisseur de 8 nanomètres.

Pour des épaisseurs différentes, on peut dresser le tableau suivant :

| Durée | 1 heure | 1 journée | 1 semaine | 1 mois |
|---|---|---|---|---|
| Epaisseur d'oxyde | 8,17 nm | 8,79 nm | 9,17 nm | 9.43 nm |
| Précision sur le temps | 1,85 % | 2,09 % | 2,24 % | 3,10 % |

La précision dépend de l'erreur commise sur la lecture du courant de drain (0,1 % environ). Ainsi, pour pouvoir mesurer des temps de l'ordre d'une semaine, on peut prévoir une couche d'espace diélectrique de l'ordre de 9 nanomètres.

La figure 3 montre une architecture particulière qui utilise une connexion directe à la grille flottante (28a, 28b) pour y appliquer un potentiel électrique et donc y faire transiter des charges. On peut aussi procéder à une charge indirecte, comme mentionné précédemment, grâce à une grille de contrôle remplaçant la connexion directe, selon la technologie utilisée pour la fabrication des cellules EPROM ou EEPROM.

La variante de la figure 4 prévoit trois sous-ensembles 17A, 17B, 17C, chacun associé au microprocesseur 14. Les sous-ensembles 17A et 17B comprennent des composants capacitifs présentant des fuites relativement faibles pour permettre des mesures de temps relativement longs.

Cependant, ces composants capacitifs sont généralement sensibles aux variations de température. Le troisième sous-ensemble 17C comporte un composant capacitif présentant un espace diélectrique très faible, inférieur à 5 nanomètres. Il est de ce fait insensible aux variations de température. Les deux composants capacitifs des sous-ensembles 17A, 17B présentent des fuites différentes au travers de leurs espaces diélectriques respectifs.

En outre, l'entité électronique sécurisée comporte un module de traitement des mesures des charges résiduelles respectives présentes dans les composants capacitifs des deux premiers sous-ensembles 17A, 17B. Ce module de traitement est adapté à extraire de ces mesures une information représentative des temps et sensiblement indépendante des apports calorifiques appliqués à l'entité électronique sécurisée pendant le temps écoulé depuis la date de référence.

Dans l'exemple, ce module de traitement se confond avec le microprocesseur 14 et la mémoire 15. En particulier, un espace de la mémoire 15 est réservé à la mémorisation d'un tableau T à double entrée de valeurs de temps et ce tableau est adressé par les deux mesures respectives issues des sous-ensembles 17A et 17B. Autrement dit, une partie de la mémoire comporte un ensemble de valeurs de temps et chaque valeur correspond à un couple de mesures résultant de la lecture du courant de drain de chacun des deux transistors des sous-ensembles 17A, 17B sensibles à la température.

Ainsi, au début d'une opération de mesure du temps écoulé, les deux composants capacitifs sont chargés, à une valeur de tension prédéterminée, par la source d'énergie électrique extérieure, via le microprocesseur 14. Lorsque la carte à microcircuit est découplée du serveur ou lecteur de carte ou autre entité, les deux composants capacitifs restent chargés mais commencent à se décharger au travers de leurs propres espaces diélectriques respectifs et, au fur et à mesure que le temps s'écoule, sans que la carte à microcircuit soit utilisée, la charge résiduelle de chacun des composants capacitifs décroît mais différemment dans l'un ou l'autre, en raison des fuites différentes déterminées par construction.

Lorsque la carte est à nouveau couplée à une source d'énergie électrique extérieure, par exemple à l'occasion d'une nouvelle utilisation de l'objet, les charges résiduelles des deux composants capacitifs sont représentatives du même intervalle de temps qu'on cherche à déterminer mais diffèrent en raison des variations de température qui ont pu se produire pendant toute cette période de temps.

Au moment de la réutilisation de l'objet, les deux transistors à effet de champ de ces deux sous-ensembles sont alimentés et les valeurs des courants de drain sont lues et traitées par le microcircuit. Pour chaque couple de valeurs de courant de drain, le microcircuit va chercher en mémoire, dans le tableau T mentionné précédemment, la valeur de temps correspondante. Cette valeur de temps est alors comparée à la durée de vie V et l'utilisation de l'objet n'est autorisée que si le temps écoulé est inférieur à la durée de vie V.

En variante, cette valeur de temps peut être comparée avec une valeur disponible dans le serveur ou lecteur de carte ou autre entité, de préférence sécurisée. De plus, l'utilisation de l'objet peut n'être autorisée que si, non seulement le temps écoulé respecte la durée de vie de l'objet, mais si en outre, la valeur de temps obtenue dans la carte (par exemple la valeur de temps mémorisée dans le tableau T) est compatible avec la valeur disponible dans le serveur ou lecteur de carte ou autre entité, c'est-à-dire si en outre ces deux valeurs coïncident ou sont relativement proches, selon une tolérance choisie au préalable.

Il n'est pas nécessaire de mémoriser le tableau T. Par exemple, le module de traitement, c'est-à-dire essentiellement le microprocesseur 14, peut comporter une partie de logiciel de calcul d'une fonction prédéterminée permettant de déterminer ladite information sensiblement indépendante des apports calorifiques en fonction des deux mesures.

Le troisième sous-ensemble 17C comporte, comme décrit plus haut, un espace diélectrique extrêmement mince le rendant insensible aux variations de température.

D'autres variantes sont possibles. En particulier, si on veut simplifier le sous-ensemble 17, on peut envisager de supprimer le composant capacitif 20 en tant que tel, car le transistor 30 à effet de champ peut lui-même être considéré comme un composant capacitif avec la grille 28b et le substrat 36 en tant qu'armatures, ces dernières étant séparées par l'espace diélectrique 34. Dans ce cas, on peut considérer que le composant capacitif et l'unité de mesure sont confondus.

Il existe plusieurs possibilités pour conserver l'indication de temps entre les utilisations successives de l'objet.

Une première possibilité consiste à charger la cellule qui mesure le temps une fois, lors de la création de l'objet. A chaque tentative d'utilisation de l'objet, l'état de la charge de la cellule de mesure du temps est représentatif du temps écoulé depuis la création de l'objet. On compare ce temps à la durée de vie attribuée à l'objet et on n'autorise l'utilisation de l'objet que si le temps écoulé ne dépasse pas la durée de vie.

Une deuxième possibilité consiste à recharger la cellule à chaque mise sous tension de l'entité électronique sécurisée. On mesure ainsi des temps plus courts, qu'on vient cumuler : à chaque mise sous tension, le temps écoulé depuis la dernière mise sous tension de l'entité électronique sécurisée est mesuré, puis le composant capacitif est rechargé. On accumule les temps ainsi mesurés dans un emplacement de la mémoire non volatile de l'entité électronique.

Cet emplacement mémoire mémorise ainsi le temps écoulé depuis la première mise sous tension et permet de connaître à tout moment le temps écoulé depuis la date de référence, indépendamment de la durée totale d'utilisation effective de l'objet.

On utilise avantageusement un seul composant capacitif pour une pluralité d'objets. Cette solution a pour avantage d'utiliser un seul composant capacitif ayant une épaisseur d'oxyde relativement faible, ce qui confère une plus grande précision dans la mesure du temps, par comparaison avec le cas d'un seul composant pour toute la durée de vie de l'entité électronique.

Le temps qui s'écoule entre l'instant de mesure de la charge du composant capacitif et le moment de sa recharge est parfois non négligeable. Pour prendre en compte cet intervalle de temps, on peut utiliser un second composant dont la fonction sera de prendre le relais du premier pendant cet intervalle de temps.

On peut également prévoir d'utiliser des composants capacitifs de précisions différentes afin d'améliorer la précision de la mesure : on choisira, parmi plusieurs mesures, celle obtenue à partir du composant le plus précis qui n'est pas déchargé.

Une troisième possibilité consiste à utiliser un composant capacitif par objet, à recharger au début de la vie de cet objet. Un avantage de cette possibilité est qu'on peut prévoir des composants de mesure du temps adaptés à la durée de vie de l'objet en question, pour améliorer la précision de la mesure du temps ; dans la cellule de mesure du temps, en particulier pour ce qui concerne l'épaisseur d'oxyde, on a vu par le tableau donné plus haut que le choix de l'épaisseur d'oxyde influe sur la précision de la mesure.

A chaque tentative d'utilisation de l'objet, l'état de la charge du composant capacitif associé à l'objet considéré est représentatif du temps écoulé depuis la création de l'objet. On compare ce temps à la durée de vie attribuée à l'objet et on n'autorise l'utilisation de l'objet que si le temps écoulé ne dépasse pas la durée de vie.

En variante, la durée de vie peut correspondre à la durée totale d'utilisation effective de l'objet. Dans ce cas, on mesure et on mémorise, à chaque utilisation de l'objet, le temps écoulé entre le début et la fin de cette utilisation et on cumule tous les temps ainsi mesurés ; ainsi, le temps total écoulé mesuré correspondra à la durée totale d'utilisation effective de l'objet.

D'autres variantes, à la portée de l'homme du métier, sont possibles.

Ainsi, conformément à l'invention, l'utilisation du compteur de temps à l'intérieur de la carte permet d'améliorer la sécurité puisque le décompte du temps est difficile à falsifier.

## Revendications

1. Entité électronique sécurisée (11) comportant des moyens (23) adaptés à mémoriser au moins un objet, ladite entité électronique sécurisée contenant un moyen (18) de mesure du temps et étant **caractérisée en ce que** :
- ledit moyen (18) de mesure du temps est adapté à fournir une mesure du temps qui s'écoule à partir d'une date de référence (Dref) associée audit objet ;
- l'entité électronique sécurisée coopère avec un moyen (19) de mémorisation d'une durée de vie (V) attribuée audit objet, le moyen (19) de mémorisation coopérant avec ledit moyen (18) de mesure du temps, de façon à comparer le temps écoulé et ladite durée de vie (V) ;
- l'entité électronique sécurisée comporte des moyens (21) de mise à jour et d'invalidation, pour mettre à jour ladite durée de vie ou l'objet ou rendre l'objet temporairement ou définitivement inutilisable s'il résulte de ladite comparaison que le temps écoulé atteint ou dépasse la durée de vie (V) ;
- ledit moyen (18) de mesure du temps est adapté à fournir une mesure du temps qui s'écoule à partir de la date de référence (Dref) lorsque l'entité électronique (11) n'est pas alimentée électriquement.

2. Entité électronique sécurisée (11) selon la revendication 1, **caractérisée en ce que** ladite durée de vie (V) correspond à la durée totale d'utilisation effective de l'objet.

3. Entité électronique sécurisée (11) selon la revendication 1, **caractérisée en ce que** ladite durée de vie (V) est une période de temps indépendante de la durée totale d'utilisation effective de l'objet.

4. Entité électronique sécurisée (11) selon la revendication 1, 2 ou 3, **caractérisée en ce que** ladite mesure du temps s'écoule à partir de la date de référence (Dref) indépendamment de tout signal d'horloge extérieur.

5. Entité électronique sécurisée (11) selon l'une quelconque des revendications précédentes, **caractérisée en ce que** le moyen (18) de mesure du temps comporte un moyen de comparaison de deux dates.

6. Entité électronique sécurisée (11) selon l'une quelconque des revendications précédentes, **caractérisée en ce que** le moyen (19) de mémorisation de la durée de vie (V) comporte une entité sécurisée.

7. Entité électronique sécurisée (11) selon l'une quelconque des revendications précédentes, **caractérisée en ce que** l'objet est un système d'exploitation, un code secret, un fichier ou un système de fichiers, une application ou des droits d'accès.

8. Entité électronique sécurisée (11) selon l'une quelconque des revendications précédentes, **caractérisée en ce que** la date de référence (Dref) est la date de création de l'objet.

9. Entité électronique sécurisée (11) selon l'une quelconque des revendications précédentes, **caractérisée en ce qu'**elle comporte au moins un sous-ensemble (17) comprenant:
un composant capacitif (20) présentant une fuite au travers de son espace diélectrique, des moyens permettant de coupler ledit composant capacitif à une source d'énergie électrique pour être chargé par ladite source d'énergie électrique et
un moyen (22) de mesure de la charge résiduelle du composant capacitif (20), ladite charge résiduelle étant au moins en partie représentative du temps qui s'est écoulé après que le composant capacitif (20) a été découplé de la source d'énergie électrique.

10. Entité électronique sécurisée (11) selon la revendication précédente, **caractérisée en ce que** ledit moyen (22) de mesure de la charge résiduelle est compris dans ledit moyen (18) de mesure du temps.

11. Entité électronique sécurisée (11) selon la revendication 9 ou 10, **caractérisée en ce que** le composant capacitif (20) est une capacité réalisée suivant la technologie MOS et dont l'espace diélectrique est constitué par un oxyde de silicium.

12. Entité électronique sécurisée (11) selon la revendication 9, 10 ou 11, **caractérisée en ce que** le moyen (22) de mesure de la charge résiduelle comprend un transistor (30) à effet de champ ayant une couche isolante (34), **en ce que** le composant capacitif (20) comporte une couche isolante (24) et **en ce que** l'épaisseur de la couche isolante (34) du transistor (30) à effet de champ est notablement plus grande que l'épaisseur de la couche isolante (24) du composant capacitif (20).

13. Entité électronique sécurisée (11) selon la revendication précédente, **caractérisée en ce que** l'épaisseur de la couche isolante (24) du composant capacitif (20) est comprise entre 4 et 10 nanomètres.

14. Entité électronique sécurisée (11) selon la revendication 11, 12 ou 13, **caractérisée :**
**en ce qu'**elle comporte au moins deux desdits sous-ensembles (17A, 17B);
**en ce que** lesdits sous-ensembles (17A, 17B) comprennent des composants capacitifs présentant des fuites différentes au travers de leurs espaces diélectriques respectifs;
et **en ce que** ladite entité électronique sécurisée (11) comporte en outre des moyens (14, 15, T) de traitement des mesures des charges résiduelles respectives desdits composants capacitifs, pour extraire desdites mesures une information sensiblement indépendante des apports calorifiques appliqués à ladite entité (11) pendant le temps écoulé à partir de la date de référence (Dref).

15. Entité électronique sécurisée (11) selon la revendication précédente, **caractérisée en ce que** lesdits moyens (14, 15, T) de traitement comportent un logiciel de calcul d'une fonction prédéterminée pour déterminer ladite information sensiblement indépendante des apports calorifiques en fonction desdites mesures.

16. Entité électronique sécurisée (11) selon l'une quelconque des revendications précédentes, **caractérisée en ce qu'**il s'agit d'une carte à microcircuit.

17. Entité électronique sécurisée (11) selon l'une quelconque des revendications précédentes, **caractérisée en ce qu'**il s'agit d'une carte PCMCIA.

## Claims

1. Secure electronic entity (11) including means (23) adapted to store one or more objects, said secure electronic entity including time measuring means (18) and being **characterised in that**:
- said time measuring means (18) are adapted to provide a measurement of the time that has elapsed from a reference time of day (Dref) associated with said object,
- the secure electronic entity co-operates with means (19) for storing a lifespan (V) assigned to said object, the storage means (19) co-operating with said time measuring means (18) to compare the elapsed time and said lifespan (V),
- the secure electronic entity comprises updating and invalidation means (21) for updating said lifespan or the object or for rendering the object temporarily or permanently unusable if the result of said comparison is that the elapsed time has reached or passed the lifespan (V),
- said time measuring means (18) are adapted to provide a measurement of the time that has elapsed from the reference time of day (Dref) when said electronic entity (11) is not supplied with electrical power.

2. Secure electronic entity (11) according to claim 1, **characterised in that** said lifespan (V) corresponds to the total time of real use of the object.

3. Secure electronic entity (11) according to claim 1, **characterised in that** said lifespan (V) is a time period independent of the total time of real use of the object.

4. Secure electronic entity (11) according to claim 1, 2 or 3, **characterised in that** said measurement of the time that has elapsed since the reference time of day (Dref) is independent of any external clock signal.

5. Secure electronic entity (11) according to any one of the preceding claims, **characterised in that** the time measuring means (18) include means for comparing two times of day.

6. Secure electronic entity (11) according to any one of the preceding claims, **characterised in that** the means (19) for storing the lifespan (V) include a secure entity.

7. Secure electronic entity (11) according to any one of the preceding claims, **characterised in that** the object is an operating system, a secret code, a file or a file system, an application or access rights.

8. Secure electronic entity (11) according to any one of the preceding claims, **characterised in that** the reference time of day (Dref) is the time of day of creation of the object.

9. Secure electronic entity (11) according to any one of the preceding claims, **characterised in that** it includes one or more subsystems (17) comprising:
- a capacitive component (20) subject to leakage across its dielectric space, means being provided for coupling said capacitive component to an electrical power supply to be charged by said electrical power supply, and
- means (22) for measuring the residual charge in the capacitive component (20), said residual charge being at least in part representative of the time that has elapsed since the capacitive component (20) was decoupled from the electrical power supply.

10. Secure electronic entity (11) according to the preceding claim, **characterised in that** said means (22) for measuring the residual charge are included in said time measuring means (18).

11. Secure electronic entity (11) according to claim 9 or 10, **characterised in that** the capacitive component (20) is a MOS capacitor whose dielectric space consists of a silicon oxide.

12. Secure electronic entity (11) according to claim 9, 10 or 11, **characterised in that** the means (22) for measuring the residual charge comprise a field-effect transistor (30) having an insulative layer (34), **in that** the capacitive component (20) includes an insulative layer (24), and **in that** the thickness of the insulative layer (34) of the field-effect transistor (30) is significantly greater than the thickness of the insulative layer (24) of the capacitive component (20).

13. Secure electronic entity (11) according to the preceding claim, **characterised in that** the thickness of the insulative layer (24) of the capacitive component (20) is from 4 to 10 nanometres.

14. Secure electronic entity (11) according to claim 11, 12 or 13, **characterised:**
**in that** it includes at least two of said subsystems (17A, 17B),
**in that** said subsystems (17A, 17B) include capacitive components subject to different leakages across their respective dielectric spaces,
and **in that** said secure electronic entity (11) further includes means (14, 15, T) for processing respective measured residual charges in said capacitive components to extract from said measurements information substantially independent of heat input to said entity (11) during the time that has elapsed since the reference time of day (Dref).

15. Secure electronic entity (11) according to the preceding claim, **characterised in that** said processing means (14, 15, T) include software for calculating a predetermined function for determining said information as a function of said measurements and substantially independently of heat input.

16. Secure electronic entity (11) according to any one of the preceding claims, **characterised in that** it is a microcircuit card.

17. Secure electronic entity (11) according to any one of the preceding claims, **characterised in that** it is a PCMCIA card.

## Patentansprüche

1. Gesicherte elektronische Entität (11), die Mittel (23) umfasst, die ausgelegt sind, um wenigstens ein Objekt zu speichern, wobei die gesicherte elektronische Entität ein Zeitmessmittel (18) enthält und **dadurch gekennzeichnet ist, dass**:
- das Zeitmessmittel (18) ausgelegt ist, um ein Zeitmaß zu liefern, das ausgehend von einem dem Objekt zugeordneten Referenzdatum (Dref) abläuft;
- die gesicherte elektronische Entität mit einem Mittel (19) zum Speichern einer dem Objekt zugewiesenen Lebensdauer (V) zusammenarbeitet, wobei das Speichermittel (19) mit dem Zeitmessmittel (18) in der Weise zusammenarbeitet, dass es die abgelaufene Zeit mit der Lebensdauer (V) vergleicht;
- die gesicherte elektronische Entität Mittel (21) zum Aktualisieren und Ungültigmachen umfasst, um die Lebensdauer oder das Objekt zu aktualisieren oder um das Objekt vorübergehend oder endgültig unbenutzbar zu machen, falls der Vergleich ergibt, dass die abgelaufene Zeit die Lebensdauer (V) erreicht oder überschritten hat;
- das Zeitmessmittel (18) ausgelegt ist, um ein Zeitmaß zu liefern, das ausgehend von dem Referenzdatum (Dref) abläuft, wenn die elektronische Entität (11) nicht elektrisch versorgt wird.

2. Gesicherte elektronische Entität (11) nach Anspruch 1, **dadurch gekennzeichnet, dass** die Lebensdauer (V) der effektiven Gesamtnutzungsdauer des Objekts entspricht.

3. Gesicherte elektronische Entität (11) nach Anspruch 1, **dadurch gekennzeichnet, dass** die Lebensdauer (V) eine von der effektiven Gesamtnutzungsdauer des Objekts unabhängige Zeitperiode ist.

4. Gesicherte elektronische Entität (11) nach Anspruch 1, 2 oder 3, **dadurch gekennzeichnet, dass** das Zeitmaß beginnend bei dem Referenzdatum (Dref) unabhängig von jedem externen Taktsignal abläuft.

5. Gesicherte elektronische Entität (11) nach einem der vorhergehenden Ansprüche, **dadurch gekennzeichnet, dass** das Zeitmessmittel (18) ein Mittel zum Vergleichen von zwei Datumsangaben umfasst.

6. Gesicherte elektronische Entität (11) nach einem der vorhergehenden Ansprüche, **dadurch gekennzeichnet, dass** das Mittel (19) zum Speichern der Lebensdauer (V) eine gesicherte Entität enthält.

7. Gesicherte elektronische Entität (11) nach einem der vorhergehenden Ansprüche, **dadurch gekennzeichnet, dass** das Objekt ein Betriebssystem, ein Geheimcode, eine Datei oder ein Dateisystem, eine Anwendung oder Zugangsrechte ist.

8. Gesicherte elektronische Entität (11) nach einem der vorhergehenden Ansprüche, **dadurch gekennzeichnet, dass** das Referenzdatum (Dref) das Herstellungsdatum des Objekts ist.

9. Gesicherte elektronische Entität (11) nach einem der vorhergehenden Ansprüche, **dadurch gekennzeichnet, dass** sie wenigstens eine Untereinheit (17) aufweist, die umfasst:
eine kapazitive Komponente (20), die einen Verlust über ihren dielektrischen Zwischenraum aufweist, Mittel, die ermöglichen, die kapazitive Komponente mit einer Quelle für elektrische Energie zu koppeln, damit sie durch die Quelle für elektrische Energie geladen wird, und
ein Mittel (22) zum Messen der Restladung der kapazitiven Komponente (20), wobei die Restladung wenigstens teilweise die Zeit darstellt, die abläuft, nachdem die kapazitive Komponente (20) von der Quelle für elektrische Energie getrennt worden ist.

10. Gesicherte elektronische Entität (11) nach dem vorhergehenden Anspruch, **dadurch gekennzeichnet, dass** das Mittel (22) zum Messen der Restladung in dem Zeitmessmittel (18) enthalten ist.

11. Gesicherte elektronische Entität (11) nach Anspruch 9 oder 10, **dadurch gekennzeichnet, dass** die kapazitive Komponente (20) eine in MOS-Technologie verwirklichte Kapazität ist, deren dielektrischer Zwischenraum durch ein Siliciumoxid gebildet ist.

12. Gesicherte elektronische Entität (11) nach Anspruch 9, 10 oder 11, **dadurch gekennzeichnet, dass** das Mittel (22) zum Messen der Restladung einen Feldeffekttransistor (30) mit einer Isolierschicht (34) umfasst, dass die kapazitive Komponente (20) eine Isolierschicht (24) umfasst und dass die Dicke der Isolierschicht (34) des Feldeffekttransistors (30) deutlich größer als die Dicke der Isolierschicht (24) der kapazitiven Komponente (20) ist.

13. Gesicherte elektronische Entität (11) nach dem vorhergehenden Anspruch, **dadurch gekennzeichnet, dass** die Dicke der Isolierschicht (24) der kapazitiven Komponente (20) im Bereich von 4 bis 10 Nanometer liegt.

14. Gesicherte elektronische Entität (11) nach Anspruch 11, 12 oder 13, **dadurch gekennzeichnet,**
**dass** sie wenigstens zwei der Untereinheiten (17A, 17B) umfasst;
**dass** die Untereinheiten (17A, 17B) kapazitive Komponenten aufweisen, die unterschiedliche Verluste über ihre jeweiligen dielektrischen Zwischenräume aufweisen;
und **dass** die gesicherte elektronische Entität (11) außerdem Mittel (14, 15, T) zum Verarbeiten der Messwerte der jeweiligen Restladungen der kapazitiven Komponenten umfasst, um aus den Messwerten eine Information zu extrahieren, die von den Wärmeangeboten, die in die Entität (11) während der Zeit, die beginnend bei dem Referenzdatum (Dref) abläuft, eingebracht werden, im Wesentlichen unabhängig ist.

15. Gesicherte elektronische Entität (11) nach dem vorhergehenden Anspruch, **dadurch gekennzeichnet, dass** die Verarbeitungsmittel (14, 15, T) eine Software zum Berechnen einer vorgegebenen Funktion umfassen, um die von den Wärmeangeboten im Wesentlichen unabhängige Information in Abhängigkeit von den Messwerten zu bestimmen.

16. Gesicherte elektronische Entität (11) nach einem der vorhergehenden Ansprüche, **dadurch gekennzeichnet, dass** es sich um eine Mikroschaltungskarte handelt.

17. Gesicherte elektronische Entität (11) nach einem der vorhergehenden Ansprüche, **dadurch gekennzeichnet, dass** es sich um eine PCMCIA-Karte handelt.
